(19) Europäisches Patentamt
European Patent Office
Office européen des brevets

(11) EP 2 768 911 B1

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **12778962.6**

(22) Anmeldetag: **19.10.2012**

(51) Int Cl.:
***C09D 5/24*** (2006.01) ***C09D 7/65*** (2018.01)
***C09D 179/02*** (2006.01) ***C08G 73/02*** (2006.01)
***C08L 75/04*** (2006.01)

(86) Internationale Anmeldenummer:
**PCT/EP2012/004379**

(87) Internationale Veröffentlichungsnummer:
**WO 2013/056843 (25.04.2013 Gazette 2013/17)**

(54) **VERWENDUNG VON ANTISTATIKA IN INNENBESCHICHTUNGSMITTELN**

USE OF ANTISTATIC AGENTS IN INTERIOR COATING COMPOSITIONS

UTILISATION D'AGENTS ANTISTATIQUES DANS DES PRODUITS DE REVÊTEMENT INTÉRIEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2011 US 201161548774 P**
**19.10.2011 EP 11185840**

(43) Veröffentlichungstag der Anmeldung:
**27.08.2014 Patentblatt 2014/35**

(73) Patentinhaber: **RELIUS Farbenwerke GmbH**
**87700 Memmingen (DE)**

(72) Erfinder:
- **FROST, Burkhard**
  **87637 Seeg (DE)**
- **BRAND, Fabien Jean**
  **68330 Huningue (FR)**

(74) Vertreter: **Leifert & Steffan Patentanwälte PartG mbB**
**Patentanwälte**
**Postfach 10 40 09**
**40031 Düsseldorf (DE)**

(56) Entgegenhaltungen:
**EP-A1- 2 186 845**
**WO-A1-2008/122576**
**US-A- 4 007 148**
**US-A- 5 089 327**

Bemerkungen:
Die Akte enthält technische Angaben, die nach dem Eingang der Anmeldung eingereicht wurden und die nicht in dieser Patentschrift enthalten sind.

EP 2 768 911 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Gebiet der Erfindung

Die vorliegende Erfindung betrifft die Verwendung kationischer Polymere enthaltend quaternäre Stickstoffatome als Antistatikum in Beschichtungszusammensetzungen.

### Stand der Technik

Beschichtungszusammensetzungen für den Gebäude-Innenbereich (Innenbeschichtungszusammensetzungen oder Innenbeschichtungsmittel) unterliegen speziellen Anforderungen. Beispielsweise dürfen diese Zusammensetzungen keine gesundheitsschädlichen Stoffe an der Oberfläche aufweisen oder aus der Beschichtung in die Raumluft abgeben. Weiterhin sollen sie Abriebbeständigkeit und besondere Oberflächenqualitäten zeigen und problemlose Renovierungsarbeiten ermöglichen. Darüber hinaus sollten die Innenbeschichtungsmittel vor allem in Nassräumen beständig gegen Wasser und Wasserdampf sein. In Arbeitsräumen oder Kinderzimmern ist beispielsweise eine Beständigkeit gegen mechanische, physikalische und chemische Belastungen erforderlich.

Außenbeschichtungsmittel erfüllen diese Anforderungen in der Regel nicht, da sie gesundheitsschädliche Dämpfe auch über längere Zeit abgeben oder ein zu geringes Deckvermögen aufweisen (Kittel, Band 6, S. Hirzel Verlag, Stuttgart, 2008, ISBN 978-3-776-1016-0, Seite 36).

In Innenräumen tritt jedoch häufig die Problematik auf, dass sich Staub an Decken und Wänden insbesondere über Heizkörpern, Türen und Fenstern absetzt. Die uneinheitliche Staubanziehung ist für den Betrachter auffälliger als eine Oberfläche, die eine homogene Staubanziehung zeigt. Der abgesetzte Staub (Anschmutzen) lässt sich häufig nicht durch Abwaschen oder Absaugen entfernen. In der Regel sind zeit- und kostenaufwändige Renovierungsarbeiten nötig.

Aus dem Stand der Technik sind bereits Beschichtungsmittel bekannt, die Antistatika als Additive zur Reduzierung der Staubablagerung enthalten. Die Antistatika werden auch als Staubschutzmittel (Antistaubmittel, Antidust-Additiv) bezeichnet.

Antistatika verhindern die durch Reibung entstehende elektrostatische Aufladung. Die Aufladung führt zur Anziehung von Staub- und Schmutzteilchen (Römpp Lexikon Chemie, 10. Auflage 1996, Band 1, Georg Thieme Verlag Stuttgart und New York, ISBN 3-13-734610-X, Stichwort Antistatika). Teilweise werden die Antistatika im Stand der Technik auch als Antistaub-Additiv bezeichnet.

In JP2009178954 A wird ein kationisches Polyamin als antistatisches Polymer in einem Polyesterfilm beschrieben. Der Polyesterfilm wird als Basisfilm für Transferfolien in Transferdruck-Verfahren eingesetzt.

Aus JP 2009019063 sind Ethylen/Vinylacetat-Copolymer-Zusammensetzungen bekannt, die in einer antistatischen Harzschicht enthalten sind. Die Beschichtungen werden auf Packungsmaterial aufgebracht.

In DE 102006045869 werden Verfahren zur antistatischen Ausrüstung von Beschichtungen, Farben oder Lacken beschrieben. Als Antistatikum werden ionische Flüssigkeiten wie 1,3-Dialkylimidazolium eingesetzt.

DE 102007026551 offenbart Pigmentpräparationen enthaltend mindestens ein Pigment und mindestens eine Verbindung der allgemeinen Formel $CH_3\text{-}(CH_2)_n\text{-}CH_2\text{-}O[(CH_2)_p\text{-}O]_m\text{-}H$. Die Pigmentpräparation kann hergestellt werden durch Dispergieren und Trocknen. Sie kann unter anderem zur Antistatikausrüstung in wasserbasierenden Farben- und Lacksystemen, Dispersionsfarben, Druckfarben, Tintensystemen und Beschichtungssystemen verwendet werden.

EP 1996657 A1 beschreibt eine antistatische Beschichtungszusammensetzung, welche ein leitfähiges Polymer enthält. Als leitfähiges Polymer werden Polyaniline, Polypyrrole und Polythiophene genannt. Die Beschichtungszusammensetzungen werden als Antistatik-Schicht in antistatischen Polarisationsfilmen von LCD-Bildschirmen eingesetzt.

Weiterhin sind quaternäre Mono-Ammonium-Verbindungen bekannt, die als Antistatikum in Tränkharzflotten enthalten sind (DE 102005029629 A1). Die Tränkharzflotte wird zur Imprägnierung cellulosehaltiger Faserstoffe eingesetzt.

In DE 2005013767 A1 werden wässrige Zubereitungen beschrieben, die schmutzabweisende Eigenschaften zeigen. Diese enthalten Polyurethane, Mineralpartikel und eine Polymerkomponente, die Polyacrylate, Polymethacrylate, Polystyrol, Polyvinylacetat, Polyurethane, Polyalkyde, Polyepoxide, Polysiloxane, Polyarylonitrile und/oder Polyester enthalten kann. Sie werden für Außenbeschichtungen, insbesondere zur Beschichtung von Dachziegeln, verwendet.

WO 2008/122576 und US 4,007,148 offenbaren die Verwendung kationischer Polymere enthaltend quaternäre Sticktoffatome als Antistatikum in Beschichtungszusammensetzungen.

Kationische Polymere weisen den Vorteil auf, dass sie nicht oder nur in sehr geringen Mengen aus der gehärteten Beschichtung migrieren, da sie im Vergleich zu niedermolekularen Verbindungen eine geringere Beweglichkeit aufweisen. Hierdurch bleibt der antistatische Effekt länger erhalten.

Aus dem Stand der Technik sind jedoch keine kationischen Polymere enthaltend quaternäre Stickstoffatome bekannt, die als Antistatikum in Innenbeschichtungsmitteln zur Verringerung des Staub-Anschmutzens verwendet werden können.

**Aufgabe**

Der vorliegenden Erfindung lag daher die Aufgabe zugrunde, die zuvor beschriebenen Nachteile des Standes der Technik zu beseitigen. Es sollten kationische Polymere enthaltend quaternäre Stickstoffatome zur Verfügung gestellt werden, die in Beschichtungszusammensetzungen für den Gebäude-Innenbereich (Innenbeschichtungszusammensetzungen) als Antistatikum verwendet werden können. Die nach Applizierung und Trocknung resultierende Beschichtung sollte im Gegensatz zum Stand der Technik verbesserte staubabweisende Eigenschaften zeigen, so dass die Staubablagerung bzw. das Anschmutzen verringert ist. Gleichzeitig sollten die Beschichtungen durch die Verwendung der kationische Polymere gegenüber Beschichtungen von Innenbeschichtungszusammensetzungen des Standes der Technik, die geringere oder keine staubabweisenden Eigenschaften aufweisen, keine Veränderung in der Farbe und Erscheinung, insbesondere der Vergilbung, zeigen.

Weiterhin sollten die Beschichtungen eine gute Abriebbeständigkeit aufweisen und antimikrobiell wirken. Darüber hinaus sollten die Zusammensetzungen lagerstabil sein, sich gut verarbeiten lassen einen guten Verlauf zeigen und eine geringe Spritzneigung aufweisen.

Die Aufgabe ist insbesondere darauf gerichtet gewesen, eine Balance zwischen der Antistaubeigenschaft auf der einen Seite und der Abriebbeständigkeit und der Verarbeitbarkeit auf der anderen Seite zu erzielen.

**Lösung der Aufgabe**

Überraschenderweise sind kationische Polymere enthaltend quaternäre Stickstoffatome, die als Antistatikum verwendet werden können, gefunden worden, die die Nachteile des Standes der Technik nicht aufweisen. Insbesondere sind kationische Polymere, die in Innenbeschichtungszusammensetzungen eingesetzt werden können, gefunden worden. Daraus werden resultierende Beschichtungen mit sehr guten staubabweisenden Eigenschaften bei gleichzeitig hervorragender Abriebbeständigkeit und Verarbeitbarkeit erzeugt. Die Staubablagerung konnte so verringert werden. Gleichzeitig konnte keine Veränderung in der Farbe und Erscheinung der Beschichtungen, insbesondere in der Vergilbung, beobachtet werden. Darüber hinaus konnte eine gute Lagerstabilität der Zusammensetzungen erzielt werden. Weiterhin wiesen die Beschichtungen der Zusammensetzungen antimikrobielle Eigenschaften auf.

Demgemäß wurde die Verwendung gemäß Anspruch 1 von Polymeren als Antistatikum in Beschichtungszusammensetzungen gefunden.

Weitere bevorzugte Ausführungsformen dieser Erfindung werden durch die Unteransprüche beschrieben.

Beschichtungszusammensetzungen

Die Zusammensetzungen, in denen die zuvor genannten kationischen Polymere verwendet werden können, sind thermisch, mit aktinischer Strahlung oder physikalisch härtbar. Vorzugsweise sind sie physikalisch härtbar. Besonders bevorzugt sind sie weder thermisch noch mit aktinischer Strahlung härtbar.

Die Zusammensetzungen werden üblicherweise bei der vorherrschenden Raumtemperatur (in der Regel unterhalb von 40 °C, vorzugsweise 18 bis 28 °C, bevorzugt 20 bis 25 °C) physikalisch gehärtet. Insbesondere erfolgt die Härtung durch Verdunstung der flüchtigen Bestandteile wie Wasser oder organischer Lösemittel oder unter Koaleszenz von Bindemittelteilchen.

Der Begriff "thermische Härtung" bedeutet die durch Hitze initiierte Vernetzung des Beschichtungsmittels. Als Hitze werden Temperaturen ab 40 °C, insbesondere ab 60 °C angesehen.

Im Rahmen der vorliegenden Erfindung ist unter "aktinischer Strahlung" elektromagnetische Strahlung wie nahes Infrarot (NIR), sichtbares Licht, UV-Strahlung, Röntgenstrahlung oder $\gamma$-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen.

Bei den Zusammensetzungen kann es sich um Beschichtungsmittel handeln, die sowohl für den Außen- als auch für den Innenbereich geeignet sind. Vorzugsweise handelt es sich um Beschichtungsmittel für den Gebäude-Innenbereich (Innenbeschichtungszusammensetzungen). Entsprechende Lacke und Farben sind beispielsweise Wandfarben, Heizkörperlacke und Fußbodenlacke sowie Lacke für Fenster und Türen. Die Heizkörper-, Fenster-, Türen- und Fußbodenlacke werden im Folgenden allgemein als Lacke bezeichnet.

Die Wandfarben und Lacke sind üblicherweise pigmentiert. Ihr Festkörpergehalt beträgt vorzugsweise 20 bis 80 Gew.-%, vorzugsweise 50 bis 75 Gew.-%, jeweils bezogen auf das Gesamtgewicht der Zusammensetzung.

Weiterhin kann die Zusammensetzung in Form transparenter oder semitransparenter Beschichtungen aufgetragen sein, wobei diese Beschichtungen keine oder sehr geringe Mengen an Pigmenten und Füllstoffen, vorzugsweise weder Pigmente noch Füllstoffe, enthalten. Die Zusammensetzungen werden im Folgenden als Lasur bezeichnet. Sie weisen üblicherweise eine sehr geringe oder gar keine Deckfähigkeit auf. Der Festkörpergehalt der Lasuren liegt vorzugsweise in einem Bereich von 5 bis 50 Gew.-%, bezogen auf das Gesamtgewicht der Zusammensetzung.

Der Festkörpergehalt der Zusammensetzung und seiner Bestandteile wird nach DIN ISO 3251 mit einer Einwaage von 2,0 g bei einer Prüfdauer von 60 min bei einer Temperatur von 125 °C bestimmt.

Wandfarben werden üblicherweise in einer Nassschichtdicke von 50 bis 1000 $\mu$m, bevorzugt 100 bis 500 $\mu$m aufgetragen. Die Nassschichtdicke der Lacke beträgt vorzugsweise 20 bis 500 $\mu$m, bevorzugt 50 bis 300 $\mu$m. Lasuren weisen in der Regel Nassschichtdicken von 1 bis 500 $\mu$m, bevorzugt 10 bis 200 $\mu$m, auf.

Die Zusammensetzungen weisen vorzugsweise einen pH-Wert von 5 bis 12 auf. Der pH-Wert der Wandfarben beträgt bevorzugt 7 bis 12 und besonders bevorzugt 7 bis 10. Für den Fall, dass die Wandfarben Wassergläser als Bindemittel enthalten, ist der bevorzugte pH-Wert im Bereich von 10 bis 12 angesiedelt. In Lacken beträgt der pH-Wert bevorzugt 5,5 bis 10.

Die Viskosität der Zusammensetzungen ist bei 20 °C vorzugsweise auf einen Wert zwischen 1500 und 5000 mPa·s eingestellt (Rotationsviskosimeter Fa. Haake, Modell VT 550 mit Spindel E100 (d=16mm, l=35mm) Drehzahl 200 $min^{-1}$, Schergeschwindigkeit 20,21 $s^{-1}$).

Die Gewichtsanteile aller Bestanteile der Zusammensetzung summieren sich zu 100 Gew.-%.

Kationische Polymere

Die kationischen Polymere, welche quaternäre Stickstoffatome enthalten, werden aus den oben genannten Gruppen a bis d sowie deren Mischungen ausgewählt. Vorzugsweise werden sie aus den Gruppen a, b und d sowie deren Mischungen, bevorzugt aus a und/oder b, ausgewählt. Ganz besonders bevorzugte kationische Polymere sind die Verbindungen gemäß Formel (I). Sie werden als Antistatikum verwendet.

Die Quaternisierung kann beispielsweise durch Alkylierung der Stickstoffatome erfolgen. Gängige Alkylierungsmittel sind beispielsweise Alkylhalogenide oder Dialkylsulfate. Geeignete Alkylhalogenide sind $C_1$- bis $C_4$-Alkylhalogenide, bevorzugt Methyl- oder Ethylchlorid. Geeignete Dialkylsulfate weisen je 1 bis 4 Kohlenstoffe pro Alkylgruppe, bevorzugt Methyl- und/oder Ethylgruppen, auf.

Der Anteil der kationischen Polymere in den Beschichtungszusammensetzungen beträgt 0,4 bis 2,5 Gew.-%, bevorzugt 0,8 bis 2,5 Gew.-%, jeweils bezogen auf das Gesamtgewicht der Beschichtungszusammensetzung. Enthalten die Zusammensetzungen weniger als 0,2 Gew.-% der kationischen Verbindungen, fällt die staubabweisende Eigenschaft zu gering aus. Bei zu hohen Anteilen über 10 Gew.-% nehmen Abriebfestigkeit, Lagerbeständigkeit und Verarbeitbarkeit ab.

Die kationischen Verbindungen der Gruppen a, b und d weisen vorzugsweise ein gewichtsmittleres Molekulargewicht von 20000 bis 500000 g/mol auf. Bevorzugt sind kationische Verbindungen mit 30000 bis 400000 g/mol, besonders bevorzugt von 40000 bis 300000 g/mol. Das gewichtsmittlere Molekulargewicht der kationischen Verbindungen c beträgt vorzugsweise 1000 g/mol bis 10000 g/mol, bevorzugt 1100 g/mol bis 6000 g/mol. Das mittlere Molekulargewicht wurde mittels Gelpermeationschromatographie (GPC) mit einem Dextranstandard ermittelt. Als Elutionsmittel dienten wässrige Natriumnitrat-Lösungen (0,5 M), welche mit 0,02 Gew.-% Natriumazid, bezogen auf das Gesamtgewicht der Lösung, versetzt wurden.

Vorzugsweise bilden Halogenide, Anionen einer Carbonsäure, insbesondere Anionen einer $C_1$-$C_{18}$-Carbonsäure, Anionen einer aromatischen oder aliphatischen Sulfonsäure, Sulfat, Hydrogensulfat, Methylsulfat, Ethylsulfat, Methylsulfonat, Anionen einer aromatischen oder aliphatischen Phosphorsäure oder Phosphinsäure, Borat, Nitrat, Nitrid, Thiocyanat, $ClO_4^-$, $PF_6^-$, oder $BF_4^-$ die Gegenionen der kationischen Polymere. Bevorzugte Gegenionen sind Halogenide, Anionen einer aromatischen oder aliphatischen Sulfonsäure, Sulfat, Anionen einer aromatischen oder aliphatischen Phosphorsäure, Borat, Nitrat, $ClO_4^-$, $PF_6^-$, oder $BF_4^-$. Besonders bevorzugt sind Halogenide, Anionen einer aromatischen oder aliphatischen Sulfonsäure, Sulfat und Anionen einer aromatischen oder aliphatischen Phosphorsäure, ganz besonders bevorzugt Halogenide, insbesondere Chloride.

Geeignete Anionen einer aromatischen oder aliphatischen Sulfonsäure sind beispielsweise die Derivate der Methylbenzolsulfonsäure, insbesondere das Tosylat, oder Alkylsulfonate wie Methyl- oder Ethylsulfonate sowie Trifluormethyl- oder Trifluorethylsulfonate. Geeignete Anionen einer aromatischen oder aliphatischen Phosphorsäure sind beispielsweise Phosphat oder Dialkylphosphate wie Dimethyl- oder Diethylphosphate.

Die kationischen Verbindungen sind vorzugsweise mit Wasser mischbar. Vorteilhafterweise werden die kationischen Polymere in einer wässrigen Lösung bereitgestellt. Der Anteil an kationischen Polymeren in diesen wässrigen Lösungen beträgt vorzugsweise 10 bis 80 Gew.-%, bevorzugt 30 bis 70 Gew.-% und besonders bevorzugt 30 bis 60 Gew.-%. Der pH-Wert dieser Lösungen beträgt vorzugsweise 4 bis 12, bevorzugt 4,5 bis 11,5 und besonders bevorzugt 4,5 bis 8.

Polymere a): Verbindungen gemäß Formel (I)

Geeignete kationische Polymere sind Verbindungen gemäß der Formel (I)

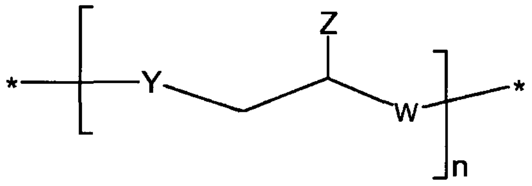 (I)

worin

n eine ganze Zahl zwischen 5 und 500 ist;
Z ist H, $C_1$-$C_{18}$-Alkyl, OH, $C_1$-$C_{18}$-Alkoxy, eine Gruppe $C(O)R_{10}$, $-O-C(O)R_{10}$ oder $COOR_{10}$, worin $R_{10}$ H oder $C_1$-$C_{18}$-Alkyl ist;
W ist $C_1$-$C_{24}$-Alkylen, $C_5$-$C_7$-Cycloalkylen, $-O-(CH_2-O)_p-$, $-O-(CH_2-CH_2-O)_q-$, $-O-((CH_2)_z-O)_t-$ oder $-CH_2-T-CH_2-CHZ-CH_2-$;
T ist $C_1$-$C_{24}$-Alkylen, $C_5$-$C_7$-Cycloalkylen, $-O-(CH_2-O)_p-$, $-O-(CH_2-CH_2-O)_q-$, $-O-(CH_2)_z-O-$; worin p, q, z und t unabhängig voneinander ganze Zahlen von 0 bis 100 sind;
Y ist eine Gruppe

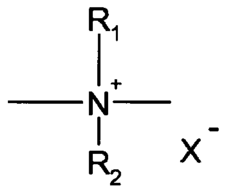

worin
$R_1$ und $R_2$ unabhängig voneinander H, $C_1$-$C_{18}$-Alkyl, $C_1$-$C_{18}$-Alkylen, wobei die Alkylengruppe mit einem Stickstoffatom einer anderen Gruppe Y verbunden ist, oder $R_1$ und $R_2$ zusammen mit dem Stickstoffatom, mit dem sie verbunden sind, einen fünf-, sechs- oder siebengliedrigen Ring bedeuten
oder Y eine Gruppe

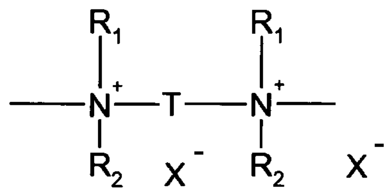

worin
$R_1$ und $R_2$ unabhängig voneinander H, $C_1$-$C_{18}$-Alkyl, $C_1$-$C_{18}$-Alkylen, wobei die Alkylengruppe mit einem Stickstoffatom einer anderen Gruppe Y verbunden ist, oder die beiden Reste $R_1$ zusammen mit T und den Stickstoffatomen, mit denen sie verbunden sind, einen fünf-, sechs- oder siebengliedrigen Ring bilden, bedeuten; und
$X^-$ aus den bereits genannten Gegenionen ausgewählt wird.

Geeignete Verbindungen sowie Verfahren zur Herstellung von Verbindungen gemäß Formel (I) werden in der europäischen Schrift EP-A-2186845 beschrieben.

Die Alkylengruppe, die zwei Stickstoffatome zweier Gruppen Y miteinander verbindet, wird exemplarisch anhand der folgenden Formel dargestellt:

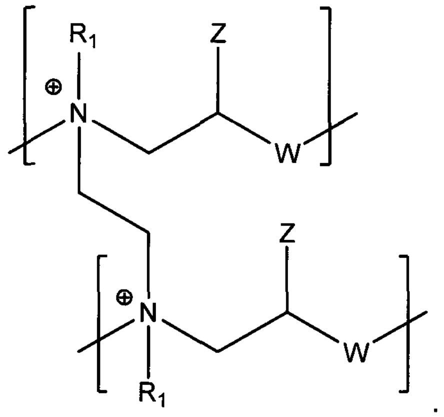

In bevorzugten Verbindungen gemäß Formel (I) sind
n eine ganze Zahl zwischen 5 und 100;
Z H, OH oder $-O-C(O)R_{10}$;
W $C_1$-$C_{24}$-Alkylen, $-O-(CH_2-O)_p-$, $-O-(CH_2-CH_2-O)_q-$ oder $-CH_2-T-CH_2-CHZ-CH_2-$; T $C_1$-$C_{24}$-Alkylen, $-O-(CH_2-O)_p-$, $-O-(CH_2-CH_2-O)_q-$ oder $-O-(CH_2)_z-O-$;
worin p, q und z unabhängig voneinander ganze Zahlen von 1 bis 20 sind;
und Y die oben genannten Gruppen.

Besonders bevorzugt ist n eine ganze Zahl zwischen 10 bis 100, ganz besonders bevorzugt von 20 bis 80.

Besonders bevorzugt ist Z eine OH-Gruppe.

Besonders bevorzugt ist W eine $C_1$-$C_{24}$-Alkylen-Gruppe oder $-CH_2-T-CH_2-CHZ-CH_2-$ mit T = $-O-(CH_2-CH_2-O)_q-$ oder $-O-(CH_2)_z-O-$.

Besonders bevorzugt ist eine Gruppe Y

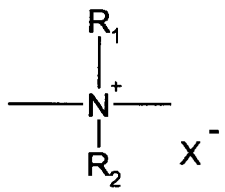

,

worin $R_1$ und $R_2$ unabhängig voneinander $C_1$-$C_{18}$-Alkyl oder $C_1$-$C_{18}$-Alkylen, wobei die Alkylengruppe mit einem Stickstoffatom einer anderen Gruppe Y verbunden ist,
oder eine Gruppe Y

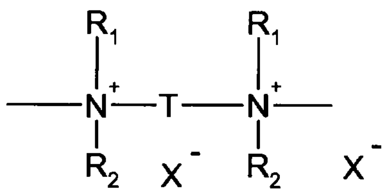

worin die beiden Reste $R_1$ zusammen mit T und den Stickstoffatomen, mit denen sie verbunden sind, einen fünf-, sechs- oder siebengliedrigen Ring bilden und die beiden Reste $R_2$ unabhängig voneinander $C_1$-$C_{18}$-Alkyl bedeuten. Ganz besonders bevorzugt wird ein sechsgliedriger Ring, insbesondere Piperazin, gebildet.

Ganz besonders vorteilhaft ist eine Ausführungsform I gemäß der Formel (I), in der Z eine OH-Gruppe, W eine $C_1$-$C_6$-Alkylen-Gruppe, insbesondere eine Methylengruppe, Y die Gruppe

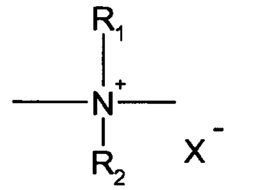

,

in der $R_1$ und $R_2$ $C_1$-$C_6$-Alkyl oder $C_1$-$C_6$-Alkylen, und insbesondere $R_1$ eine Methylgruppe und $R_2$ eine Methylgruppe oder eine Ethylengruppe sind, wobei die Alkylengruppen mit einem Stickstoffatom einer anderen Gruppe Y verbunden sind, bedeuten. Geeignete Verbindungen gemäß der Formel (I) werden beispielsweise unter der Bezeichnung Catiofast 159 (BASF SE, Ludwigshafen) oder Magnafloc LT31 (BASF SE, Ludwigshafen) angeboten.

Ganz besonders vorteilhaft ist ebenso eine Ausführungsform II gemäß der Formel (I), in der Z eine OH-Gruppe, W eine Gruppe $-CH_2-T-CH_2-CHZ-CH_2-$ mit Z = OH und T = $-O-(CH_2-CH_2-O)_q-$ mit q = 5 bis 14, bevorzugt mit q = 9, oder $-O-(CH_2)_z-O-$ mit z = 3 bis 5, bevorzugt mit z = 4, und Y die Gruppe

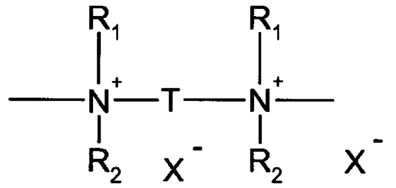

,

in der die beiden Reste $R_1$ zusammen mit T und den Stickstoffatomen, mit denen sie verbunden sind, einen sechsgliedrigen Ring, insbesondere Piperazin, bilden und die beiden Reste $R_2$ unabhängig voneinander $C_1$-$C_6$-Alkyl, insbesondere Methyl oder Ethyl, bedeuten. Entsprechende Verbindungen werden etwa in den Beispielen des Dokuments EP-A-2186845 angegeben.

Verbindungen gemäß der Formel (I) weisen vorzugsweise ein gewichtsmittleres Molekulargewicht von 30000 g/mol bis 150000 g/mol und bevorzugt von 40000 g/mol bis 120000 g/mol auf.

Die Verbindungen gemäß Formel (I) weisen vorzugsweise ein Äquivalenzgewicht an permanenten Amin-Kationen von 0,014 bis 0,73 meq pro Gramm Zusammensetzung auf. Bevorzugt beträgt das Äquivalenzgewicht 0,028 bis 0,18 meq/g, besonders bevorzugt 0,058 bis 0,18 meq/g.

Ganz bevorzugte Polymere a) in der kationischen Form weisen die folgende allgemeine Struktur auf:

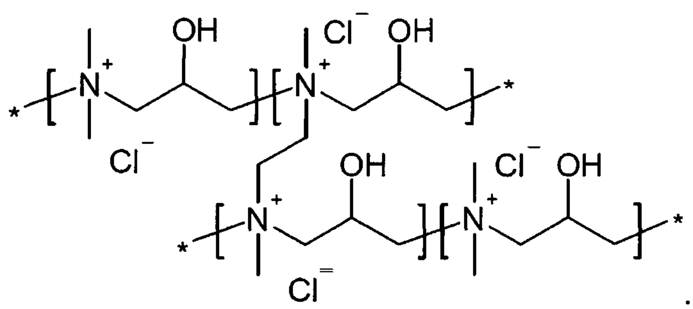

.

Polymere b): Poly-Diallyldialkylamine und deren Copolymere

Die Alkylgruppen der Poly-Diallyldialkylamine enthalten vorzugsweise je 1 bis 4 C-Atome, bevorzugt je 1 C-Atom. Das quaternäre Stickstoffatom ist vorzugsweise Bestandteil eines Heterocyclus', bevorzugt von Pyrrolidin. Eine bevorzugte Ausführungsform der Poly-Diallyldialkylamine enthält in der kationischen Form 1,1-Dialkyl-3,4-divinylpyrrolidin-1-ium. Die Alkylgruppen sind vorzugsweise $C_1$- bis $C_6$-Alkyl, bevorzugt Methyl oder Ethyl.

Die Diallyldialkylamin-Monomere können Bestandteil eines Copolymers sein. Geeignete Comonomere sind ungeladene Vinylmonomere. Die Vinylmonomere sind vorzugsweise wasserlöslich. Beispielsweise sind Acrylamide oder Vinylpyrrolidon geeignet.

Vorzugsweise beträgt das gewichtsmittlere Molekulargewicht 50000 g/mol bis 250000 g/mol, bevorzugt 80000 g/mol bis 220000 g/mol.

Die Poly-Diallyldialkylamine und deren Copolymere haben vorzugsweise ein Äquivalenzgewicht an permanenten Amin-Kationen von 0,12 bis 6 meq pro Gramm Zusammensetzung. Bevorzugt beträgt das Äquivalenzgewicht 0,24 bis 1,5 meq/g, besonders bevorzugt 0,48 bis 1,5 meq/g.

Ganz bevorzugte Polymere b) in der kationischen Form weisen die folgende allgemeine Struktur auf:

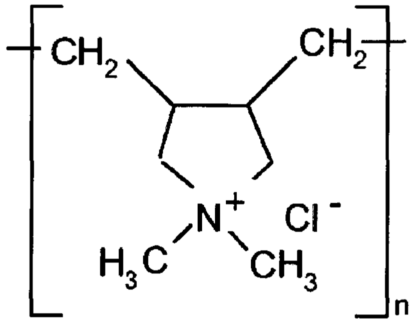

Poly-Diallyldimethylammonium-Chloride sind beispielsweise unter der Bezeichnung Magnafloc LT35 (BASF SE, Ludwigshafen) erhältlich.

Polymere c): Polyalkylenimine

Polyalkylenimine sind verzweigte, sekundäre und tertiäre Aminogruppen enthaltende Polymere, deren Kohlenwasserstoffketten, die die Stickstoffatome miteinander verbinden, 1 bis 18, vorzugsweise 2 bis 8 gesättigte C-Atome aufweisen und/oder ungesättigte, geradkettige und/oder verzweigte Kohlenwasserstoffketten sind. Bevorzugte Polyalkylenimine sind Polyethylenimine.

Die Polyalkylenimine adsorbieren an der Oberfläche eines Substrats, wodurch die Stickstoff-Atome quaternisiert werden. Insofern handelt es sich bei den Polyalkyleniminen, die zunächst eingesetzt werden, um quaternisierbare Polymere. Sie stellen kationische Polymere im Sinne der Erfindung dar.

Die Polyalkylenimine weisen vorzugsweise ein Äquivalenzgewicht an quaternisierbaren Aminen von 0,046 bis 2,32 meq pro Gramm Zusammensetzung auf. Bevorzugt beträgt das Äquivalenzgewicht 0,092 bis 0,58 meq/g, besonders bevorzugt 0,18 bis 0,58 meq/g.

Ganz bevorzugte Polymere c) weisen die folgende allgemeine Struktur auf:

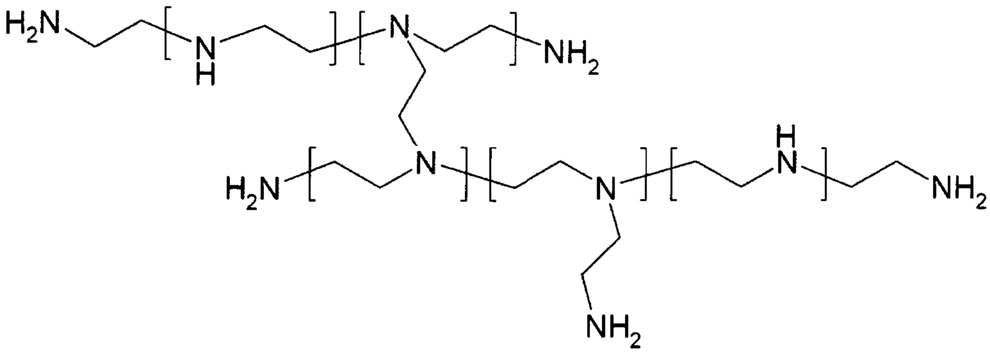

Geeignete Polyethylenimine sind beispielsweise unter der Bezeichnung Lupasol G20 oder Lupasol G100 (BASF SE, Ludwigshafen) im Handel verfügbar.

Polymere d): Polyvinylimidazole und deren Copolymere

Geeignete Verbindungen sind kationische Polymere der Polyvinylimidazole. Vorzugsweise werden Copolymere, insbesondere Block-Copolymere, aus Vinylpyrrolidon und Vinylimidazol, eingesetzt. Sie weisen bevorzugt ein gewichtsmittleres Molekulargewicht von 20000 g/mol bis 60000 g/mol und besonders bevorzugt von 30000 g/mol bis 50000 g/mol auf.

Die Polyvinylimidazole und deren Copolymere haben vorzugsweise ein Äquivalenzgewicht an permanenten Amin-Kationen von 0,014 bis 0,7 meq pro Gramm Zusammensetzung. Bevorzugt beträgt das Äquivalenzgewicht 0,028 bis 0,18 meq/g, besonders bevorzugt 0,056 bis 0,18 meq/g.

Ganz bevorzugte Polymere d) in der kationischen Form weisen die folgende allgemeine Struktur auf:

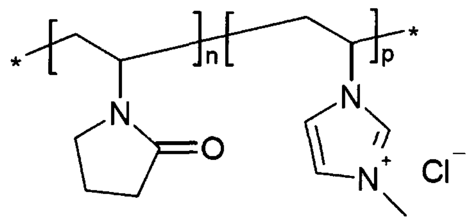

Copolymere aus Vinylpyrrolidon und quaternisierten Vinylimidazol-Chloriden sind erhältlich unter der Bezeichnung Luviquat Excellence (BASF SE, Ludwigshafen).

Bindemittel

Bindemittel im Sinne der vorliegenden Erfindung sind organische, polymere Verbindungen, die in der Zusammensetzung für die Filmbildung verantwortlich sind und die im Folgenden zusammengestellt werden. Sie stellen den nichtflüchtigen Anteil des Beschichtungsstoffes ohne Pigmente, kationische Polymere und Füllstoffe dar (in Analogie zu DIN EN 971-1: 1996-09).

Die Zusammensetzungen enthalten mindestens ein Bindemittel. Vorzugsweise beträgt der Bindemittelanteil 1 bis 90 Gew.-%, bezogen auf das Gesamtgewicht der Zusammensetzung. Bevorzugt ist ein Bindemittelanteil von 5 bis 80 Gew-% und besonders bevorzugt von 6 bis 70 Gew.-%. In Wandfarben und Lacken beträgt der Bindemittelanteil bevorzugt 1 bis 80 Gew.-%, besonders bevorzugt 3 bis 50 Gew.-%. Lasuren enthalten bevorzugt 10 bis 90 Gew.-% Bindemittel.

Als Bindemittel kann die Zusammensetzung Alkydharze, Epoxidharze, Polyurethane, Vinylacetat/Ethylen-Copolymere, Wassergläser, insbesondere Kaliwassergläser, sowie Bindemittel auf Basis von Acrylaten, Styrol und/oder Vinylestern wie Styrolacrylate oder Butylacrylate enthalten. Zusammensetzungen, die Wassergläser enthalten, umfassen diese bevorzugt in einem Anteil von 1 bis 98 Gew.-%, besonders bevorzugt von 5 bis 40 Gew.-%, jeweils bezogen auf das Gesamtgewicht der Zusammensetzung.

Die Mindestfilmbildetemperatur der Bindemittel beträgt vorzugsweise 0 °C bis 40 °C, bevorzugt 0 °C bis 20 °C. Für Beschichtungen des Innenbereichs ist es besonders bevorzugt, wenn die Bindemittel eine Mindestfilmbildetemperatur von 0 °C bis 5 °C aufweisen. Die Mindestfilmbildetemperatur gibt die Temperatur an, oberhalb derer ein geschlossener Film gebildet wird. Darunter ist die Filmbildung in aller Regel gestört oder unvollständig. Die Bestimmung erfolgt nach DIN 53787: 1974-02 (vgl. Römpp Lacke und Druckfarben, Georg Thieme Verlag Stuttgart / New York 1998, ISBN 3-13-776001-1, Stichwort "Mindestfilmbildetemperatur").

In Wandfarben werden vorzugsweise Vinylacetat/Ethylen-Copolymere, Styrolacrylate, Butylacrylate oder Mischungen dieser Polymere eingesetzt. Lacke enthalten vorzugsweise Polyurethane, Acrylate, Alkydharze oder Epoxidharze sowie deren Mischungen. Die Lasuren können die für Wandfarben und Lacke genannten Bindemittel enthalten.

Füllstoffe

Die Zusammensetzung kann Calciumcarbonate, Siliciumverbindungen wie Siliciumdioxid oder Aluminium- oder Magnesium-Aluminium-Silikate, Aluminiumoxid oder -oxidhydrat, Kaoline, Kreide, Talkum, Kieselgur oder Holzmehl als Füllstoffe enthalten. Der Anteil an Füllstoffen beträgt vorzugsweise 0 bis 90 Gew.-%, bezogen auf das Gesamtgewicht der Zusammensetzung.

Lasuren enthalten vorzugsweise maximal 5 Gew.-%, bevorzugt maximal 2 Gew.-% und ganz besonders bevorzugt maximal 1 Gew.-% Füllstoffe. Insbesondere enthalten Lasuren keine Füllstoffe.

Handelt es sich bei der Zusammensetzung um eine Wandfarbe, beträgt der FüllstoffAnteil bevorzugt 1 bis 90 Gew.-%, besonders bevorzugt 20 bis 60 Gew.-%.

In Lacken liegt der Anteil an Füllstoffen bevorzugt im Bereich von 0 bis 60 Gew.-%, besonders bevorzugt 0 bis 35 Gew.-%.

Pigmente

Die Zusammensetzung kann weiterhin Pigmente enthalten. Ihr Anteil in der Zusammensetzung beträgt vorzugsweise 0 bis 75 Gew.-%, bezogen auf das Gesamtgewicht der Zusammensetzung. In Wandfarben liegt der Pigmentanteil bevorzugt im Bereich von 0 bis 50 Gew.-%, besonders bevorzugt im Bereich von 4 bis 25 Gew.-%. In Lacken ist ein Pigmentanteil von 10 bis 60 Gew.-% bevorzugt. Der Pigmentanteil in Lasuren beträgt bevorzugt 0 bis 15 Gew.-%.

Lasuren enthalten besonders bevorzugt lediglich transparente Pigmente oder gar keine Pigmente, ganz besonders bevorzugt gar keine Pigmente.

Pigmente sind pulver- oder plättchenförmige Farbmittel, die im Gegensatz zu Farbstoffen im umgebenden Medium unlöslich sind (vgl. Römpp Lacke und Druckfarben, Georg Thieme Verlag Stuttgart / New York 1998, ISBN 3-13-776001-1, Stichwort "Pigmente").

Vorzugsweise wird das Pigment aus der Gruppe bestehend aus organischen und anorganischen, farbgebenden, effektgebenden, farb- und effektgebenden, transparenten, magnetisch abschirmenden, elektrisch leitfähigen, korrosionshemmenden, fluoreszierenden und phosphoreszierenden Pigmenten ausgewählt. Bevorzugte Pigmente für Wandfarben und Lacke sind farb- und/oder effektgebende Pigmnte, und für Lasuren transparente Pigmente.

Wasser

Die Zusammensetzungen können Wasser enthalten. Vorzugsweise sind 8 bis 60 Gew.-%, bevorzugt 15 bis 50 Gew.-% Wasser enthalten.

Organische Lösemittel

Weiterhin können die Zusammensetzungen organische Lösemittel enthalten. Vorzugsweise ist der Anteil an organischen Lösemitteln in den Wandfarben kleiner als 5 Gew.-%, bevorzugt geringer als 2 Gew.-% und besonders bevorzugt weniger als 1 Gew.-%, jeweils bezogen auf das Gesamtgewicht der Wandfarben. In einer besonders bevorzugten Ausführungsform enthalten die Wandfarben keine organischen Lösemittel.

Als organische Lösemittel sind beispielsweise Trimethylpentan, Propylenglykol oder Dipropylenglykolbutylether in Wandfarben enthalten.

Der Anteil an organischen Lösemitteln in Lacken beträgt vorzugsweise 0 bis 30 Gew.-% und bevorzugt 0 bis 10 Gew.-%, jeweils bezogen auf das Gesamtgewicht der Lacke. Geeignete organische Lösemittel sind beispielsweise Testbenzin, Ester wie Butylacetat oder Butyldiglykolacetat oder Ether wie Glykolether oder Methylethylketon.

Lasuren enthalten Lösemittel in einem Anteil von 0 bis 60 Gew.-%, bevorzugt von 0 bis 40 Gew.-%, jeweils bezogen auf das Gesamtgewicht der Lasuren. Geeignet sind die für Wandfarben und Lacke genannten Lösemittel.

Zusatzstoffe

Die Zusammensetzung kann Zusatzstoffe wie Konservierungsmittel, Verdickungsmittel, Dispergiermittel und Entschäumer enthalten.

Geeignete Konservierungsmittel sind beispielsweise Isothiazolinon-Zubereitungen wie 2-Methyl-2H-isothiazol-3-on oder 1,2-Benzisothiazolin-3H-on. Eine geeignete wässrige Zubereitung wird beispielsweise unter der Bezeichnung Acticide MBS der Firma Thor GmbH, Speyer, angeboten. Vorzugsweise beträgt der Anteil an Konservierungsmittel 0 bis 2 Gew.-%, bevorzugt 0,001 bis 0,3 Gew.-%, jeweils bezogen auf das Gesamtgewicht der Zusammensetzung.

Geeignete Verdickungsmittel sind die dem Fachmann für Lacke und Farben geläufigen Verdickungsmittel. Beispielsweise seien Celluloseether, Bentonit, Polysaccaride, pyrogene Kieselsäuren oder Schichtsilikate genannt. Der bevorzugte Anteil beträgt 0 bis 3 Gew.-%, bevorzugt 0,001 bis 1 Gew.-%, jeweils bezogen auf das Gesamtgewicht der Zusammensetzung.

Als Dispergiermittel kommen die dem Fachmann bekannten Dispergiermittel für Lacke und Farben in Betracht. Beispielsweise seien Alkylbenzolsulfonate, Polycarboxylate, Fettsäureamine oder Polyacrylsäuresalze erwähnt. Vorzugsweise beträgt der Anteil 0 bis 2 Gew.-%, bevorzugt 0,001 bis 0,5 Gew.-%, jeweils bezogen auf das Gesamtgewicht der Zusammensetzung.

Geeignete Entschäumer sind beispielsweise Poly(organo)siloxane, Siliconöle oder Mineralöle. Vorzugsweise beträgt der Entschäumer-Anteil 0 bis 1 Gew.-%, bevorzugt 0 bis 0,5 Gew.-%, jeweils bezogen auf das Gesamtgewicht der Zusammensetzung.

Die aufgeführten Zusatzstoffe werden nicht als Bindemittel im Sinne dieser Erfindung angesehen.

**Weitere Ausführungsformen der Erfindung**

Die erfindungsgemäß zu verwendenden kationischen Polymere sind insbesondere dazu geeignet, als Antistatikum in Beschichtungsmitteln für den Gebäude-Innenbereich (Innenbeschichtungszusammensetzungen) eingesetzt zu werden. Darüber hinaus können sie auch in Beschichtungsmitteln eingesetzt werden, die für den Gebäude-Außenbereich verwendet werden können. Vorzugsweise werden die Zusammensetzungen als Wandfarben, insbesondere Innenwandfarben, Lacke, insbesondere für Fenster, Türen, Heizkörper oder Fußböden, oder Lasuren, jeweils vorzugsweise für den Innenbereich, verwendet.

Die Lasuren haben den besonderen Vorteil, dass sie auf bereits gestrichenen oder lackierten Substraten nachträglich aufgebracht werden können, um ergänzend eine staubabweisende Beschichtung bereitzustellen.

Die Zusammensetzungen, in denen die Antistatika eingesetzt werden, sind geeignet, Substrate, welche im Gebäude-Außen- oder -Innenbereich, vorzugsweise - Innenbereich, angebracht bzw. installiert werden oder sind, zu beschichten. Die Substrate bestehen üblicherweise aus Metall, Beton, Gips, Mörtel, Baugips, Holz oder Holzfasern, Kunststoffen, Papier, Gipskarton. Geeignete Substrate werden beispielsweise als Wände oder Decken, Heizungen, Fußböden, Fensterrahmen, Türen und Türzargen oder Tapeten verwendet bzw. eingesetzt. Die Wände oder Decken können beispielsweise aus Beton, Holz oder Gipskarton bestehen, verputzt sein und/oder Tapeten aufweisen. Die Zusammensetzungen können auf bereits im oder am Gebäude angebrachte bzw. installierte Substrate aufgetragen werden. Ebenfalls ist es möglich, die Substrate wie beispielsweise Tapeten, Gipskartonplatten, Türen oder Fenster zunächst zu beschichten und anschließend im oder am Gebäude anzubringen bzw. zu installieren.

Die Zusammensetzungen werden durch alle üblichen und bekannten, für die jeweiligen Beschichtungsstoffe geeigneten Applikationsmethoden, wie z. B. Spritzen, Sprühen, Rakeln, Streichen, Gießen, Tauchen, Träufeln oder Walzen appliziert und anschließend getrocknet. Vorzugsweise wird gespritzt, gesprüht oder gestrichen. Üblicherweise wird bei Raumtemperatur, insbesondere physikalisch, gehärtet.

Im Folgenden wird die Erfindung unter Bezugnahme auf Beispiele weiter erläutert.

**Beispiele**

**1. Antistatische Eigenschaften**

Es wurden Innenbeschichtungszusammensetzungen der Beispiele 1 bis 9 hergestellt, wobei als kationisches Polymer Magnafloc LT35 (wässrige Lösung, enthält 40 Gew.-% an kationischem Polymer) eingesetzt wird.

| **Rezeptbeispiele** von Innenwandfarben mit und ohne Antistatikum | | | | | |
|---|---|---|---|---|---|
| | Angaben in Gew.-Teilen | | | | |
| Komponente | Beispiel 1 | Beispiel 2 | Beispiel 3 | Beispiel 4 | Beispiel 5 |
| Wasser | 34 | 34 | 34 | 34 | 34 |
| Dispergiermittel (Polycarboxylat) | 0,3 | 0,3 | 0,3 | 0,3 | 0,3 |
| Celluloseetherverdicker | 0,3 | 0,3 | 0,3 | 0,3 | 0,3 |
| Polyurethanverdicker | 0,4 | 0,4 | 0,4 | 0,4 | 0,4 |
| Konservieru ngsm ittel Isothiazolinon-Zubereitunq | 0,2 | 0,2 | 0,2 | 0,2 | 0,2 |
| Entschäumer (Siloxanoligomere) | 0,2 | 0,2 | 0,2 | 0,2 | 0,2 |
| Polymerdispersion (Vinylacetat/Ethylen) | 16 | 16 | 16 | 16 | 16 |
| Pigment (Titandioxid Rutil) | 15 | 15 | 15 | 15 | 15 |
| Füllstoff CaC03 gefällt | 8 | 8 | 8 | 8 | 8 |
| Füllstoff Aluminiumsilikat | 15 | 15 | 15 | 15 | 15 |
| Füllstoff Talkum | 4 | 4 | 4 | 4 | 4 |
| Füllstoff Calcit (CaCO3) | 6,6 | 6,6 | 6,6 | 6,6 | 6,6 |
| Magnafloc LT35 | 0 | 1 | 3 | 4 | 5 |
| | | | | | |
| Gesamt | 100 | 101 | 103 | 104 | 105 |
| | | | | | |
| Eigenschaften | | | | | |
| Staubanziehung -dL | 7 | 5,5 | 1,3 | n.E. | 1,1 |
| Oberflächenwiderstand in Ω/sq, rel. Luftfeuchtigkeit: 50 % | 6,53E+09 | 3,26E+09 | 1,10E+08 | 3,76E+07 | 2,15E+07 |

(fortgesetzt)

| | | | | | |
|---|---|---|---|---|---|
| Eigenschaften | | | | | |
| Nassabrieb in µm | 15 | n.E. | n.E. | 21 | n.E. |
| Verarbeitung | 5 | 4 | 5 | 5 | 4 |
| n. E. = nicht ermittelt | | | | | |

Die Zusammensetzungen, die mit Magnafloc LT35 versetzt wurden, zeigen eine deutlich verringerte Staubanziehung. Ebenso ist der Oberflächenwiderstand der Zusammensetzung enthaltend das kationische Polymer geringer als in der Zusammensetzung ohne das kationische Polymer. Demzufolge wird die antistatische, staubabweisende Eigenschaft durch die Zugabe des kationischen Polymers verbessert.

| **Rezeptbeispiele von Innenwandfarben mit und ohne Antistatikum** | | | | |
|---|---|---|---|---|
| | Angaben in Gew.-Teilen | | | |
| Komponente | Beispiel 6 | Beispiel 7 | Beispiel 8 | Beispiel 9 |
| Wasser | 31,9 | 31,9 | 31,9 | 31,9 |
| Dispergiermittel (Polycarboxylat) | 0,3 | 0,3 | 0,3 | 0,3 |
| Celluloseetherverdicker | 0,4 | 0,4 | 0,4 | 0,4 |
| Polyurethanverdicker | 0 | 0 | 0 | 0 |
| Konservierungsmittel Isothiazolinon-Zubereitung | 0,2 | 0,2 | 0,2 | 0,2 |
| Entschäumer (Siloxanoligomere) | 0,2 | 0,2 | 0,2 | 0,2 |
| Polymerdispersion Vinlacetat/Ethlen | 10 | 10 | 10 | 10 |
| Pigment (Titandioxid Rutil) | 5 | 5 | 5 | 5 |
| Füllstoff CaCO3 gefällt | 6 | 6 | 6 | 6 |
| Füllstoff Aluminiumsilikat | 0 | 0 | 0 | 0 |
| Füllstoff Talkum | 6 | 6 | 6 | 6 |
| Füllstoff Calcit (CaC03) | 40 | 40 | 40 | 40 |
| Magnafloc LT35 | 0 | 1 | 3 | 5 |
| | | | | |
| Gesamt | 100 | 101 | 103 | 105 |
| | | | | |
| **Eigenschaften** | | | | |
| Staubanziehung -dL | 9,5 | 7,4 | 7,8 | 7,8 |
| Oberflächenwiderstand in Ω/sq, rel. Luftfeuchtigkeit: 50 % | 1,66E+10 | 1,27E+09 | 3,47E+07 | 7,52E+06 |
| Nassabrieb in µm | 72 | 54 | 82 | 98 |
| Verarbeitung | 5 | 3 | 5 | 4 |

Analog zu den oben vorgestellten Beispielen 2 bis 5 weisen auch die Beispiele 7 bis 9 mit einer anderen Beschichtungszusammensetzung eine verbesserte antistatische, staubabweisende Eigenschaft auf.

Die Beispiele 2 bis 5 wurden wiederholt, wobei andere kationische Polymere untersucht wurden.

| | Gewichtsteile in Farbe gemäß Beispiel 1 | -dL | Oberflächenwiderstand in Ω/sq rel. Luftfeuchtigkeit: 50% | Oberflächenwiderstand in Ω/sq rel. Luftfeuchtigkeit: 30 % |
|---|---|---|---|---|
| Catiofast 159 | 3 | 0,9 | n.E. | n.E. |
| Catiofast 159 | 5 | 1,3 | 2.38E+07 | 1.65E+08 |
| Magnafloc LT31 | 3 | 1,4 | n.E. | n.E. |
| Magnafloc LT31 | 5 | 1,0 | 2.43E+07 | 3.10E+08 |
| Luviquat Excellence | 1 | 3,5 | n.E. | n.E. |
| Luviquat Excellence | 3 | 2,8 | n.E. | n.E. |
| Luviquat Excellence | 5 | 2,1 | 2.63E+07 | 2.08E+08 |
| Lupasol G20 | 1 | 5,9 | n.E. | n.E. |
| Lupasol G20 | 5 | 3,2 | 4.19E+09 | 3.48E+11 |
| Lupasol G100 | 3 | 4,8 | n.E. | n.E. |
| Lupasol G100 | 5 | 2,4 | 5.93E+09 | 3.89E+11 |
| Beispiel 1 als Vergleich | 0 | 7 | 6.53E+09 | 1.32E+11 |

Staubtest

Der Staubtest wird in Anlehnung an den Test aus WO 01/12713 A durchgeführt.
Um die Staubanlagerung im Laborversuch zu untersuchen, werden zunächst die Probenkörper beschichtet. Anschließend werden die beschichteten Platten einer Atmosphäre mit aufgewirbeltem Staub ausgesetzt. Dazu wird ein 2-L-Becherglas mit einem 80 mm langen Magnetrührstab mit dreieckigem Querschnitt mit Staub (Kohlenstaub/20 g Aktivkohle, Riedel-de Haen, Seelze, Deutschland, Artikel Nr. 18003) ca. 1 cm hoch gefüllt. Mit Hilfe eines Magnetrührers wird der Staub aufgewirbelt und der Probekörper bei laufendem Rührer für 14 s dieser Staubatmosphäre ausgesetzt. Je nach verwendetem Probekörper setzt sich mehr oder weniger Staub auf den Probekörpern ab. Der Staub wird durch Aufsprühen eines klaren Mattlacks fixiert. Die Beurteilung der Staubanlagerungen (Staubfiguren) wird mittels einer spektrophotometrischen Analyse durchgeführt. Zur spektrophotometrischen Analyse wird ein horizontales Spektrophotometer (CM-3600 der Firma Minolta) eingesetzt.
Der ermittelte Wert -dL ergibt sich aus der Formel:

-dL= L*(Probekörper nach Aussetzung in der Staubatmosphäre und Fixieren mit Mattlack) – L*(Probekörper ohne Staubbehandlung mit Mattlackbehandlung)

Der Wert L* gibt die Helligkeit zwischen 0 und 100 an, ein Wert von 100 entspricht der maximalen Helligkeit. Die Helligkeit L* wird nach der kolorimetrischen Norm (CIE1964: L*C*h) definiert. Dieser wird ermittelt nach DIN 6167 bei einem Winkel von 10° und Normallicht D65 (gemäß ISO 3664: Strahlungsverteilung mit einer Farbtemperatur von

6504 K). Die leichte Vergilbung oder Verringerung von L* durch Auftragen des Mattlacks kann vernachlässigt werden.

Bestimmung des Oberflächenwiderstands

Die Farbdispersionen wurden mit einem Rakel bei einer Nassschichtdicke von 300 $\mu$m auf Kunststofffolien aufgetragen (Leneta Folie, Fa. Leneta, Mahwah, NH, 07430 USA). Die Trocknung erfolgte bei 20°C und einer relativen Luftfeuchtigkeit von 50 % für mindestens 24 Stunden.

Die Oberflächenleitfähigkeitswerte SR [Ohm/square] wurden mit einer Spring-Elektrode gemessen in Analogie zu der Norm DIN 53482 bei einer Spannung von 500 V und 22 °C und bei einer kontrollierten relativen Luftfeuchtigkeit (RH). Vor der Messung wurden die Proben mindestens für 5 Tage bei der für die Messung gewählten Luftfeuchtigkeit vorgelagert.

Nassabrieb

Der Nassabrieb wurde nach DIN EN 13300 ermittelt. Dazu wurde das Beschichtungsmaterial mit einem Rakel in einer Nass-Schichtstärke von 300 $\mu$m auf eine PVC-Folie (Leneta Folie, Fa. Leneta, Mahwah, NH, 07430 USA) aufgezogen und im Klimaraum 28 Tage bei 20°C und 50% relativer Feuchtigkeit getrocknet. Anschließend werden die Proben zugeschnitten und das Bruttogewicht mit einer Analysenwaage ermittelt. Zur Bestimmung des Nassabriebs werden die Proben in einem speziellen Scheuergerätgerät der Fa. Erichsen unter Verwendung eines Scheuerflieses S-UFN 158 x 224 mm der Fa. 3M Scotch-Brite insgesamt 200 Scheuerbewegungen unter gleichzeitiger Einwirkung einer 0,25%-igen wässrigen tensidischen Lösung (Tensid Marlon A 350 der Fa. Sasol Germany GmbH) ausgesetzt. Anschließen werden die Proben abgewaschen und im Trockenschrank bei 50°C bis zur Gewichtskonstanz getrocknet und das Nettogewicht ermittelt. Aus dem Gewichtsverlust wird anschließend der Nassabriebswert in $\mu$m bezogen auf die Trockenschichtdicke ermittelt.

Verarbeitung

Die Verarbeitung gibt die visuelle Beurteilung der Verarbeitung in einer Skala von 0 = schlecht bis 5 = sehr gut an. Hierbei werden Eigenschaften wie die Verarbeitbarkeit, der Verlauf und die Spritzneigung beurteilt.

**2. Einfluss der kationischen Polymere auf die Farbeigenschaften**

Dieser Einfluss wurde anhand einer Farbformulierung nach Rezeptbeispiel 1 bestimmt. Hierzu wurden die Werte ohne und mit kationisches Polymer ermittelt.

| | Gewichtsteile in Farbe gemäß Beispiel 1 | L* | Gelbwert |
|---|---|---|---|
| ohne kationisches Polymer | 0 | 96.3 | 2.75 |
| Catiofast 159 | 3 | 96 | 3.43 |
| Catiofast 159 | 5 | 96 | 3.43 |
| Magnafloc LT31 | 3 | 96 | 3.43 |
| Magnafloc LT31 | 5 | 96 | 3.43 |
| Magnafloc LT35 | 1 | 96.2 | 3.13 |
| Magnafloc LT35 | 3 | 96 | 3.13 |
| Magnafloc LT35 | 5 | 96 | 3.13 |
| Luviquat Excellence | 1 | 96.2 | 3.13 |
| Luviquat Excellence | 3 | 96 | 3.13 |
| Luviquat Excellence | 5 | 96 | 3.06 |
| Lupasol G20 | 1 | 96.2 | 3.72 |
| Lupasol G20 | 3 | 96 | 3.92 |
| Lupasol G20 | 5 | 95.9 | 3.55 |

(fortgesetzt)

| | Gewichtsteile in Farbe gemäß Beispiel 1 | L* | Gelbwert |
|---|---|---|---|
| Lupasol G100 | 1 | 96.1 | 3.91 |
| Lupasol G100 | 3 | 96 | 3.81 |
| Lupasol G100 | 5 | 95.9 | 3.55 |
| L* wird nach der kolorimetrischen Norm (CIE1964: L*C*h) definiert (siehe oben). Der Gelbwert wird rechnerisch aus den kolorimetrischen Daten ermittelt nach DIN 6167. | | | |

Die Untersuchungen ergeben, dass die hinzugefügten kationischen Polymere die Farbeigenschaften nicht signifikant beeinflussen.

**3. Lagerstabilität**

Der Oberflächenwiderstand wurde anhand des Beispiels 1 und des Beispiels 1 zuzüglich 4 Teilen an Lösung eines kationischen Polymers nach 14 Tagen bei 20 °C bzw. 50 °C und unterschiedlicher relativer Luftfeuchtigkeit bestimmt.

| Zusammensetzung | Oberflächenwiderstand in Q/sq rel. Luftfeuchtigkeit: 50% | Oberflächenwiderstand in Ω/sq rel. Luftfeuchtigkeit: 30% |
|---|---|---|
| Beispiel 1 nach 14 Tagen bei 20°C/ Homogenisierung | 2.94E+09 | 2.08E+11 |
| Beispiel 1 nach 14 Tagen bei 50°C/ Homogenisierung | 2.90E+09 | 3.23E+11 |
| Beispiel 1 zuzüglich 4 Teilen Catiofast 159 nach 14 Tagen bei 20°C/ Homogenisierung | 3.73E+07 | 2.10E+09 |
| Beispiel 1 zuzüglich 4 Teilen Catiofast 159 nach 14 Tagen bei 50°C/ Homogenisierung | 2.83E+07 | 1.52E+09 |
| Beispiel 1 zuzüglich 4 Teilen Magnafloc LT 31 nach 14 Tagen bei 20°C/ Homogenisierung | 3.16E+07 | 1.45E+09 |
| Beispiel 1 zuzüglich 4 Teilen Magnafloc LT 31 nach 14 Tagen bei 50°C/ Homogenisierung | 3.08E+07 | 1.58E+09 |
| Beispiel 1 zuzüglich 4 Teilen Magnafloc LT 35 nach 14 Tagen bei 20°C/ Homogenisierung | 3.76E+07 | 7.83E+08 |
| Beispiel 1 zuzüglich 4 Teilen Magnafloc LT 35 nach 14 Tagen bei 50°C/ Homogenisierung | 3.69E+07 | 9.25E+08 |
| Beispiel 1 zuzüglich 4 Teilen Luviquat Excellence nach 14 Tagen bei 20°C/ Homogenisierung | 4.00E+07 | 6.22E+08 |
| Beispiel 1 zuzüglich 4 Teilen Luviquat Excellence nach 14 Tagen bei 50°C/ Homogenisierung | 3.96E+07 | 5.78E+08 |

**Patentansprüche**

1. Verwendung von Polymeren als Antistatikum in Beschichtungszusammensetzungen, wobei die Polymere ausgewählt werden aus der Gruppe bestehend aus

a) kationischen Verbindungen gemäß der Formel (I)

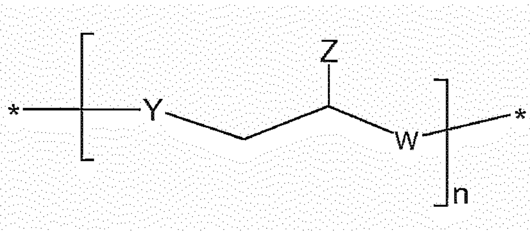 (I)

enthaltend quaternäre Stickstoffatome
b) kationischen, quaternäre Stickstoffatome enthaltenden Poly-Diallyldialkylaminen und deren Copolymere,
c) quaternisierbaren Polyalkyleniminen,
d) kationischen, quaternäre Stickstoffatome enthaltenden Polyvinylimidazole und deren Copolymere und
e) Mischungen daraus,

wobei in Formel (I)

n eine ganze Zahl zwischen 5 und 500 ist;
Z H, $C_1$-$C_{18}$-Alkyl, OH, $C_1$-$C_{18}$-Alkoxy, eine Gruppe $C(O)R_{10}$, $-O-C(O)R_{10}$ oder $COOR_{10}$ ist, worin $R_{10}$ H oder $C_1$-$C_{18}$-Alkyl bedeutet;
W $C_1$-$C_{24}$-Alkylen, $C_5$-$C_7$-Cycloalkylen, $-O-(CH_2-O)_p-$, $-O-(CH_2-CH_2-O)_q-$, $-O-(CH_2)_{z-}O)_t-$ oder $-CH_2-T-CH_2-CHZ-CH_2-$ ist;
T $C_1$-$C_{24}$-Alkylen, $C_5$-$C_7$-Cycloalkylen, $-O-(CH_2-O)_p-$, $-O-(CH_2-CH_2-O)_q-$, $-O-(CH_2)_z-O-$ ist;
worin p, q, z und t unabhängig voneinander ganze Zahlen von 0 bis 100 sind;
Y eine Gruppe

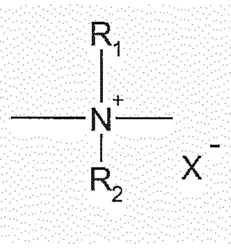

ist, worin
$R_1$ und $R_2$ unabhängig voneinander H, $C_1$-$C_{18}$-Alkyl, $C_1$-$C_{18}$-Alkylen, wobei die Alkylengruppe mit einem Stickstoffatom einer anderen Gruppe Y verbunden ist, oder $R_1$ und $R_2$ zusammen mit dem Stickstoffatom, mit dem sie verbunden sind, einen fünf-, sechs- oder siebengliedrigen Ring bedeuten
oder Y eine Gruppe

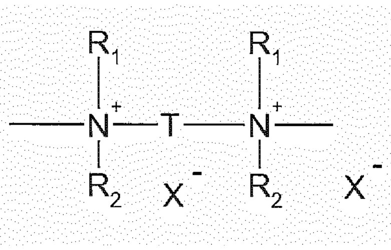

ist, worin
$R_1$ und $R_2$ unabhängig voneinander H, $C_1$-$C_{18}$-Alkyl, $C_1$-$C_{18}$-Alkylen, wobei die Alkylengruppe mit einem Stickstoffatom einer anderen Gruppe Y verbunden ist, oder die beiden Reste $R_1$ zusammen mit T und den Stickstoffatomen, mit denen sie verbunden sind, einen fünf-, sechs- oder siebengliedrigen Ring bilden, bedeuten;

und $X^-$ Halogenide, Anionen einer $C_1$-$C_{18}$-Carbonsäure, Anionen einer aromatischen oder aliphatischen Sulfonsäure, Sulfat, Anionen einer aromatischen oder aliphatischen Phosphorsäure, Borat, Nitrat, $ClO_4^-$, $PF_6^-$, oder $BF_4^-$ sind;
und die Polymere in einem Anteil von 0,4 bis 2,5 Gew.-%, bezogen auf das Gesamtgewicht der Zusammensetzung, enthalten sind.

**2.** Verwendung gemäß Anspruch 1, **dadurch gekennzeichnet, dass** die Polymere ausgewählt werden aus der Gruppe bestehend aus

a) kationischen Verbindungen gemäß der Formel (I) enthaltend quaternäre Stickstoffatome,
b) kationischen, quaternäre Stickstoffatome enthaltenden Poly-Diallyldialkylaminen und deren Copolymeren,
d) kationischen, quaternäre Stickstoffatome enthaltenden Polyvinylimidazolen und deren Copolymeren und
e) Mischungen daraus.

**3.** Verwendung gemäß Anspruch 1, **dadurch gekennzeichnet, dass** die Polymere ausgewählt werden aus

a) kationischen Verbindungen gemäß der Formel (I) enthaltend quaternäre Stickstoffatome, und/oder
b) kationischen, quaternäre Stickstoffatome enthaltenden Poly-Diallyldialkylaminen und deren Copolymeren,

**4.** Verwendung gemäß einem der vorherigen Ansprüche, **dadurch gekennzeichnet, dass** in Formel (I)
n eine ganze Zahl zwischen 5 und 100;
Z H, OH oder $-O-C(O)R_{10}$;
W $C_1$-$C_{24}$-Alkylen, $-O-(CH_2-O)_p-$, $-O-(CH_2-CH_2-O)_q-$ oder $-CH_2-T-CH_2-CHZ-CH_2-$; T $C_1$-$C_{24}$-Alkylen, $-O-(CH_2-O)_p-$, $-O-(CH_2-CH_2-O)_q-$ oder $-O-(CH_2)_z-O-$;
worin p, q und z unabhängig voneinander ganze Zahlen von 1 bis 20 sind; bedeuten und Y die bereits genannte Bedeutung hat.

**5.** Verwendung gemäß einem der vorherigen Ansprüche, **dadurch gekennzeichnet, dass** die Beschichtungszusammensetzungen physikalisch härtbar sind.

**6.** Verwendung gemäß einem der vorherigen Ansprüche, **dadurch gekennzeichnet, dass** die Zusammensetzung Bindemittel enthält, die ausgewählt werden aus Alkydharzen, Epoxidharzen, Polyurethanen, Vinylacetat/Ethylen-Copolymeren, Wassergläsern sowie Bindemitteln auf Basis von Acrylaten, Styrol und/oder Vinylestern.

**7.** Verwendung gemäß einem der vorherigen Ansprüche, **dadurch gekennzeichnet, dass** die Zusammensetzung Calciumcarbonate, Siliciumverbindungen, Aluminiumoxid oder -oxidhydrat, Kaoline, Kreide, Talkum, Kieselgur oder Holzmehl als Füllstoffe enthalten.

**8.** Verwendung gemäß einem der vorherigen Ansprüche, **dadurch gekennzeichnet, dass** die Zusammensetzung Pigmente enthält.

**9.** Verwendung gemäß einem der vorherigen Ansprüche, **dadurch gekennzeichnet, dass** die Zusammensetzung Wasser enthält.

**10.** Verwendung gemäß einem der vorherigen Ansprüche, **dadurch gekennzeichnet, dass** die Zusammensetzung mindestens einen Zusatzstoff, der aus Konservierungsmitteln, Verdickungsmitteln, Dispergiermitteln und Entschäumern ausgewählt ist, enthält.

**11.** Verwendung gemäß einem der vorherigen Ansprüche, **dadurch gekennzeichnet, dass** die Zusammensetzung als Wandfarbe, Heizkörperlack, Fußbodenlack, Fensterlack, Türlack oder Lasur verwendet wird.

**12.** Verwendung gemäß einem der vorherigen Ansprüche, **dadurch gekennzeichnet, dass** die Zusammensetzung auf Substraten aus Metall, Beton, Gips, Mörtel, Baugips, Holz oder Holzfasern, Kunststoffen, Papier oder Gipskarton aufgebracht wird.

**13.** Verwendung gemäß Anspruch 11, **dadurch gekennzeichnet, dass** die Substrate Wände oder Decken, Heizungen, Fußböden, Fensterrahmen, Türen und Türzargen oder Tapeten sind.

## Claims

1. Use of polymers as an anti-static agent in coating compositions, wherein the polymers are selected from the group consisting of

   a) cationic compounds according to formula (I)

   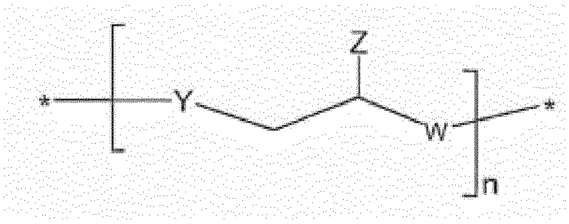
   (I)

   containing quaternary nitrogen atoms,
   b) cationic poly-diallyl dialkylamines containing quaternary nitrogen atoms, and their copolymers,
   c) quaternisable polyalkyleneimines,
   d) cationic polyvinylimidazoles containing quaternary nitrogen atoms, and their copolymers and
   e) mixtures thereof,

   wherein in formula (I)

   n is an integer between 5 and 500;
   Z is H, $C_1$-$C_{18}$ alkyl, OH, $C_1$-$C_{18}$ alkoxy, a $C(O)R_{10}$, $-O-C(O)R_{10}$ or $COOR_{10}$ group, wherein $R_{10}$ represents H or $C_1$-$C_{18}$ alkyl;
   W is $C_1$-$C_{24}$ alkylene, $C_5$-$C_7$ cycloalkylene, $-O-(CH_2-O)_p-$, $-O-(CH_2-CH_2-O)_q-$, $-O-((CH_2)_z-O)_t$ or $-CH_2-T-CH_2-CHZ-CH_2-$;
   T is $C_1$-$C_{24}$ alkylene, $C_5$-$C_7$ cycloalkylene, $-O-(CH_2-O)_p-$, $-O-(CH_2-CH_2-O)_q-$, $-O-(CH_2)_z-O-$;
   wherein p, q, z and t each independently represent integers from 0 to 100;
   Y is a group

   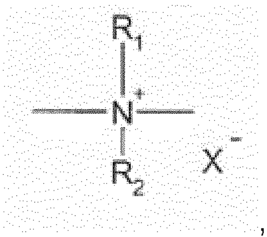
   ,

   wherein
   $R_1$ and $R_2$ each independently represent H, $C_1$-$C_{18}$ alkyl, $C_1$-$C_{18}$ alkylene, wherein the alkylene group is connected to a nitrogen atom of another group Y, or $R_1$ and $R_2$ represent, together with the nitrogen atom to which they are connected, a ring with five, six or seven members,
   or Y is a group

   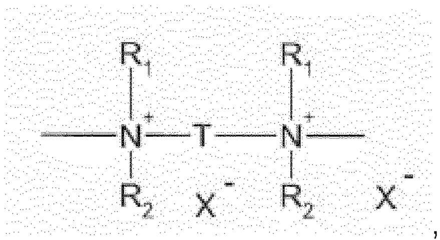
   ,

   wherein

$R_1$ and $R_2$ each independently represent H, $C_1$-$C_{18}$ alkyl, $C_1$-$C_{18}$ alkylene, wherein the alkylene group is connected to a nitrogen atom of another group Y, or both residues $R_1$, together with T and the nitrogen atoms to which they are connected, form a ring with five, six or seven members;
and $X^-$ are halogenides, anions of a $C_1$-$C_{18}$ carboxylic acid, anions of an aromatic or aliphatic sulfonic acid, sulfate, anions of an aromatic or aliphatic phosphoric acid, borate, nitrate, $ClO_4^-$, $PF_6^-$ or $BF4^-$;
and the polymers are contained in a proportion of 0.4 to 2.5 % by weight with respect to the total weight of the composition.

**2.** Use according to claim 1, **characterised in that** the polymers are selected from the group consisting of

a) cationic compounds according to formula (I) containing quaternary nitrogen atoms,
b) cationic poly-diallyl dialkylamines containing quaternary nitrogen atoms, and their copolymers,
d) cationic polyvinylimidazoles containing quaternary nitrogen atoms, and their copolymers, and
e) mixtures thereof.

**3.** Use according to claim 1, **characterised in that** the polymers are selected from

a) cationic compounds according to formula (I) containing quaternary nitrogen atoms, and/or
b) cationic poly-diallyl dialkylamines containing quaternary nitrogen atoms, and their copolymers,

**4.** Use according to any one of the preceding claims, **characterised in that** in formula (I)
n is an integer between 5 and 100;
Z is H, OH or $-O-C(O)R_{10}$;
W is $C_1$-$C_{24}$ alkylene, $-O-(CH_2-O)_p-$, $-O-(CH_2-CH_2-O)_q-$ or $-CH_2-T-CH_2-CHZ-CH_2-$; T is $C_1$-$C_{24}$ alkylene, $-O-(CH_2-O)_p-$, $-O-(CH_2-CH_2-O)_q-$ or $-O-(CH_2)_z-O-$;
wherein p, q and z each independently represent integers from 1 to 20;
and Y has the above-mentioned meaning.

**5.** Use according to any one of the preceding claims, **characterised in that** the coating compositions are physically curable.

**6.** Use according to any one of the preceding claims, **characterised in that** the composition contains binders that are selected from alkyd resins, epoxy resins, polyurethanes, copolymers of vinyl acetate / ethylene, water glasses as well as binders based on acrylates, styrene and/or vinyl esters.

**7.** Use according to any one of the preceding claims, **characterised in that** the composition contains calcium carbonates, silicon compounds, aluminum oxide or oxide hydrate, kaolins, chalk, talc, kieselguhr or wood meal as fillers.

**8.** Use according to any one of the preceding claims, **characterised in that** the composition contains pigments.

**9.** Use according to any one of the preceding claims, **characterised in that** the composition contains water.

**10.** Use according to any one of the preceding claims, **characterised in that** the composition contains at least one additive selected from preservatives, thickening agents, dispersing agents and defoaming agents.

**11.** Use according to any one of the preceding claims, **characterised in that** the composition is used as wall paint, radiator paint, floor finish, window paint, door paint or glaze.

**12.** Use according to any one of the preceding claims, **characterised in that** the composition is applied to substrates made of metal, concrete, plaster, mortar, plaster for construction, wood or wood fibres, plastics, paper or plasterboard.

**13.** Use according to claim 11, **characterised in that** the substrates are walls or ceilings, heatings, floors, window frames, doors and door frames, or wallpapers.

## Revendications

**1.** Utilisation des polymères en tant qu'agents antistatiques dans les compositions de revêtement, dans laquelle les

polymères sont choisis dans le groupe consistant en

a) les composés cationiques selon la formule (I)

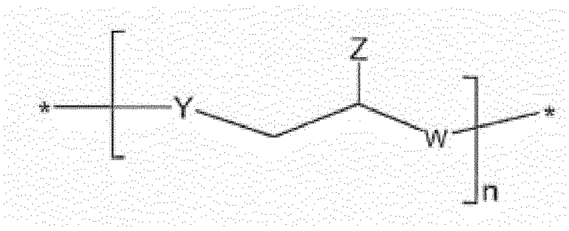
(I)

contentant des atomes d'azote quaternaires,
b) les poly-diallyl-dialkylamines cationiques contenant des atomes d'azote quaternaires, et leurs copolymères,
c) les polyalkylèneimines quaternisables,
d) les polyvinylimidazoles cationiques contenant des atomes d'azote quaternaires, et leurs copolymères,
e) les mélanges de ceux-ci,

où, dans la formule (I)

n est un nombre entier entre 5 et 500 ;
Z est H, alkyle en $C_1$-$C_{18}$, OH, alcoxy en $C_1$-$C_{18}$, un groupe $C(O)R_{10}$, $-O-C(O)R_{10}$ ou $COOR_{10}$, dans lequel $R_{10}$ représente H ou alkyle en $C_1$-$C_{18}$ ;
W est alkylène en $C_1$-$C_{24}$, cycloalkylène en $C_5$-$C_7$, $-O-(CH_2-O)_p-$, $-O-(CH_2-CH_2-O)_q-$, $-O-((CH_2)_{z-O})_t-$ ou $-CH_2-T-CH_2-CHZ-CH_2-$ ;
T est alkylène en $C_1$-$C_{24}$, cycloalkylène en $C_5$-$C_7$, $-O-(CH_2-O)_p-$, $-O-(CH_2-CH_2-O)q-$, $-O-(CH_2)_z-O-$ ;
où p, q, z et t indépendamment l'un de l'autre sont des nombres entiers de 0 à 100 ;
Y est un groupe

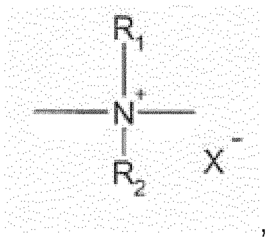
,

où
$R_1$ et $R_2$ indépendamment l'un de l'autre représentent H, alkyle en $C_1$-$C_{18}$, alkylène en $C_1$-$C_{18}$, dans lequel le groupe alkylène est lié à un atome d'azote d'un autre groupe Y, ou $R_1$ et $R_2$ représentent, ensemble avec l'atome d'azote auqel ils sont liés, un noyau avec cinq, six ou sept chaînons,
ou Y est un groupe

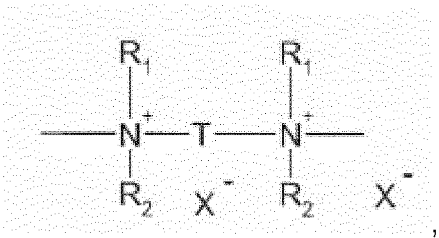
,

où
$R_1$ et $R_2$ indépendamment l'un de l'autre représentent H, alkyle en $C_1$-$C_{18}$, alkylène en $C_1$-$C_{18}$, dans lequel le groupement alkylène est lié à un atome d'azote d'un autre groupe Y, ou les deux restes $R_1$ forment, ensemble avec T et les atomes d'azote auqels ils sont liés, un noyau avec cinq, six ou sept chaînons ;

et $X^-$ répresente les halogénures, les anions d'un acide carboxylique en $C_1$-$C_{18}$, les anions d'un acide sulfonique aromatique ou aliphatique, le sulfate, les anions d'un acide phosphorique aromatique ou aliphatique, le borate, le nitrate, $ClO4^-$, $PF_6^-$, ou $BF_4^-$ ;
et les polymères sont contenus dans une proportion de 0,4 à 2,5 % en poids par rapport au poids total de la composition.

**2.** Utilisation selon la revendication 1, **caractérisée en ce que** les polymères sont choisis dans le groupe consistant en

a) les composés cationiques selon la formule (I) contentant des atomes d'azote quaternaires,
b) les poly-diallyl-dialkylamines cationiques contenant des atomes d'azote quaternaires, et leurs copolymères,
d) les polyvinylimidazoles cationiques contenant des atomes d'azote quaternaires, et leurs copolymères,
e) les mélanges de ceux-ci.

**3.** Utilisation selon la revendication 1, **caractérisée en ce que** les polymères sont choisis parmi

a) les composés cationiques selon la formule (I) contentant des atomes d'azote quaternaires, et/ou
b) les poly-diallyl-dialkylamines cationiques contenant des atomes d'azote quaternaires, et leurs copolymères,

**4.** Utilisation selon l'une quelconque des revendications précédentes, **caractérisée en ce que** dans la formule (I)
n est un nombre entier entre 5 et 100 ;
Z est H, OH ou $-O-C(O)R_{10}$;
W est alkylène en $C_1$-$C_{24}$, $-O-(CH_2-O)_p-$, $-O-(CH_2-CH_2-O)_q-$ ou $-CH_2-T-CH_2-CHZ-CH_2-$ ;
T est alkylène en $C_1$-$C_{24}$, $-O-(CH_2-O)_p-$, $-O-(CH_2-CH_2-O)_q-$ ou $-O-(CH_2)_{z-}O-$ ;
où p, q et z indépendamment l'un de l'autre sont des nombres entiers de 1 à 20;
et Y a la signification mentionnée ci-dessus.

**5.** Utilisation selon l'une quelconque des revendications précédentes, **caractérisée en ce que** les compositions de revêtement sont durcissables physiquement.

**6.** Utilisation selon l'une quelconque des revendications précédentes, **caractérisée en ce que** la composition contient des liants choisis parmi les résines alkyde, les résines époxy, les polyuréthanes, les copolymères d'acétate de vinyle / éthylène, verres solubles et liants à base d'acrylates, de styrène et/ou d'esters vinyliques.

**7.** Utilisation selon l'une quelconque des revendications précédentes, **caractérisée en ce que** la composition contient des carbonates de calcium, composés de silicium, oxyde d'aluminium ou oxyde d'aluminium hydraté, kaolins, craie, talc, kieselguhr ou farine de bois en tant qu'agents de remplissage.

**8.** Utilisation selon l'une quelconque des revendications précédentes, **caractérisée en ce que** la composition contient des pigments.

**9.** Utilisation selon l'une quelconque des revendications précédentes, **caractérisée en ce que** la composition contient de l'eau.

**10.** Utilisation selon l'une quelconque des revendications précédentes, **caractérisée en ce que** la composition contient au moins un additif choisi parmi les agents conservateurs, les agents épaississants, les agents de dispersion et les agents anti-mousse.

**11.** Utilisation selon l'une quelconque des revendications précédentes, **caractérisée en ce que** la composition est utilisée en tant que peinture murale, peinture pour radiateurs, finition de sols, peinture pour fenêtres, peinture pour portes ou lasure.

**12.** Utilisation selon l'une quelconque des revendications précédentes, **caractérisée en ce que** la composition est appliquée sur les substrats en métal, béton, plâtre, mortier, plâtre de construction, bois ou fibres de bois, matières plastiques, papier ou plaques de plâtre.

**13.** Utilisation selon la revendication 11, **caractérisée en ce que** les substrats sont des murs ou plafonds, des chauffages, des sols, des châssis de fenêtres, des portes et des encadrements de portes ou des papiers peints.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2009178954 A
- JP 2009019063 B
- DE 102006045869
- DE 102007026551
- EP 1996657 A1
- DE 102005029629 A1
- DE 2005013767 A1
- WO 2008122576 A
- US 4007148 A
- EP 2186845 A
- WO 0112713 A


### In der Beschreibung aufgeführte Nicht-Patentliteratur


- Römpp Lexikon Chemie. Georg Thieme Verlag, 1996, vol. 1
- Römpp Lacke und Druckfarben. Georg Thieme Verlag, 1998